(19) Europäisches Patentamt / European Patent Office / Office européen des brevets

(11) **EP 1 635 498 B1**

(12) **EUROPÄISCHE PATENTSCHRIFT**

(45) Veröffentlichungstag und Bekanntmachung des Hinweises auf die Patenterteilung:
**02.03.2011 Patentblatt 2011/09**

(51) Int Cl.:
*H04L 1/00* *(2006.01)*    *H04L 1/08* *(2006.01)*
*H04L 27/34* *(2006.01)*

(21) Anmeldenummer: **05026909.1**

(22) Anmeldetag: **27.12.2002**

(54) **Verfahren und Vorrichtung zur Datenübertragung, wobei ein Bitratenanpassungsmuster zwischen Sender und Empfänger signalisiert wird**

Method and device for transferring data wherein a bit rate adaptation model is signalled between the transmitter and the receiver

Procédé et dispositif pour la transmission de données, ou un modéle d'adaptation de débit binaire est signalé entre émetteur et recepteur

(84) Benannte Vertragsstaaten:
**DE ES FR GB**

(30) Priorität: **07.01.2002 DE 10200296**
**15.01.2002 DE 10201330**

(43) Veröffentlichungstag der Anmeldung:
**15.03.2006 Patentblatt 2006/11**

(62) Dokumentnummer(n) der früheren Anmeldung(en) nach Art. 76 EPÜ:
**02792697.1 / 1 461 888**

(73) Patentinhaber: **SIEMENS AKTIENGESELLSCHAFT**
**80333 München (DE)**

(72) Erfinder:
• **Döttling, Martin, Dr.**
**85579 Neubiberg (DE)**
• **Raaf, Bernhard**
**82061 Neuried (DE)**

(56) Entgegenhaltungen:
**WO-A-01/47124    DE-A- 19 959 179**
**US-B1- 6 247 150**

EP 1 635 498 B1

**Beschreibung**

Die vorliegende Erfindung betrifft ein Verfahren sowie eine entsprechend ausgestaltete Vorrichtung zur Datenübertragung gemäß einem ARQ-Verfahren, insbesondere einem Hybrid-ARQ-Verfahren, in einem Kommunikationssystem, insbesondere einem Mobilfunksystem.

Insbesondere in Verbindung mit Mobilfunksystemen wird häufig die Verwendung sogenannter Paketzugriffsverfahren bzw. paketorientierter Datenverbindungen vorgeschlagen, da die aufkommenden Nachrichtentypen häufig einen sehr hohen Burstfaktor besitzen, so dass nur kurze Aktivitätsperioden existieren, die von langen Ruhepausen unterbrochen sind. Paketorientierte Datenverbindungen können in diesem Fall die Effizienz im Vergleich zu anderen Datenübertragungsverfahren, bei denen ein kontinuierlicher Datenstrom vorhanden ist, erheblich steigern, da bei Datenübertragungsverfahren mit einem kontinuierlichen Datenstrom eine einmal zugeteilte Ressource, wie z.B. eine Trägerfrequenz oder ein Zeitschlitz, während der gesamten Kommunikationsbeziehung zugeteilt bleibt, d.h. eine Ressource bleibt auch dann belegt, wenn momentan keine Datenübertragungen anliegen, so dass diese Ressource für andere Netzteilnehmer nicht zur Verfügung steht. Dies führt zu einer nicht optimalen Nutzung des knappen Frequenzspektrums für Mobilfunksysteme.

Zukünftige Mobilfunksysteme, wie beispielsweise gemäß dem UMTS-Mobilfunkstandard ("Universal Mobile Telecommunications System"), werden eine Vielzahl unterschiedlicher Dienste anbieten, wobei neben der reinen Sprachübertragung Multimedia-Anwendungen zunehmend an Bedeutung gewinnen werden. Die damit einhergehende Dienstevielfalt mit unterschiedlichen Übertragungsraten erfordert ein sehr flexibles Zugriffsprotokoll auf der Luftschnittstelle zukünftiger Mobilfunksysteme. Paketorientierte Datenübertragungsverfahren haben sich hier als sehr geeignet erwiesen.

Im Zusammenhang mit UMTS-Mobilfunksystemen wurde bei paketorientierten Datenverbindungen ein sogenanntes ARQ-Verfahren ("Automatic Repeat Request") vorgeschlagen. Dabei werden die von einem Sender an einen Empfänger übertragenen Datenpakete empfängerseitig nach ihrer Decodierung hinsichtlich ihrer Qualität überprüft. Ist ein empfangenes Datenpaket fehlerhaft, fordert der Empfänger eine erneute Übertragung dieses Datenpakets von dem Sender an, d.h. es wird ein Wiederholungsdatenpaket von dem Sender an den Empfänger gesendet, welches mit dem zuvor gesendeten und fehlerhaft empfangenen Datenpaket identisch bzw. teilweise identisch ist (je nachdem, ob das Wiederholungsdatenpaket weniger oder gleich viele Daten wie das ursprüngliche Datenpaket enthält, wird von einer vollen oder einer partiellen Wiederholung gesprochen). Hinsichtlich dieses für den UMTS-Mobilfunkstandard vorgeschlagenen ARQ-Verfahrens, welches auch als Hybrid-ARQ-Verfahren bezeichnet wird, ist sowohl die Übertragung von Daten als auch von sogenannten Headerinformationen in einem Datenpaket vorgesehen, wobei die Headerinformationen auch Informationen zur Fehlerüberprüfung, wie beispielsweise CRC-Bits ("Cyclic Redundancy Check") aufweisen und auch zur Fehlerkorrektur codiert sein können (sogenannte "Forward Error Correction", FEC).

Gemäß dem derzeitigen Stand der UMTS-Standardisierung wird die Übertragung der Bits der einzelnen Datenpakete bzw. Wiederholungsdatenpakete nach Durchführung einer entsprechenden Kanalcodierung mittels QAM-Modulation ("Quadraturamplitudenmodulation") vorgeschlagen. Dabei werden die einzelnen Bits über ein als "Gray-Mapping" bezeichnetes Verfahren auf entsprechende QAM-Symbole abgebildet, welche einen zweidimensionalen Symbolraum bilden. Dabei ist problematisch, dass bei der vorgeschlagenen QAM-Modulation mit einem Alphabetumfang, welcher mehr als vier QAM-Symbole umfasst, die Zuverlässigkeit der zu übertragenden Bits zwischen den höherwertigen Bits und den niedrigerwertigen Bits erheblich variiert, wobei dies insbesondere hinsichtlich der durchzuführenden Kanalcodierung nachteilig ist, da hierzu bevorzugt Turbo-Coder eingesetzt werden, welche zur Erzielung einer ausreichend hohen Leistungsfähigkeit gleichmäßige Bitzuverlässigkeiten erfordern. Bei einem Hybrid-ARQ--Verfahren, bei welchem das Wiederholungsdatenpaket mit dem ursprünglichen Datenpaket identisch ist, führt die zuvor erläuterte Eigenschaft der Variation der Bitzuverlässigkeiten dazu, dass bestimmte Bits der Datenpakete und der Wiederholungsdatenpakete jeweils an der gleichen Stelle im QAM-Symbolraum zu finden sind, so dass hierdurch die Leistungsfähigkeit der gesamten Datenübertragung reduziert wird und sich eine frühzeitige Begrenzung des Datendurchsatzes ergibt.

Zur Lösung dieses Problems wurde bereits vorgeschlagen, dass diejenigen Bits, welche an der gleichen Stelle in dem ursprünglichen Datenpaket und den Wiederholungsdatenpaketen auftreten, unterschiedlichen QAM-Symbolen im QAM-Symbolraum durch dynamische Umordnung des "Gray-Mapping" zugewiesen werden.

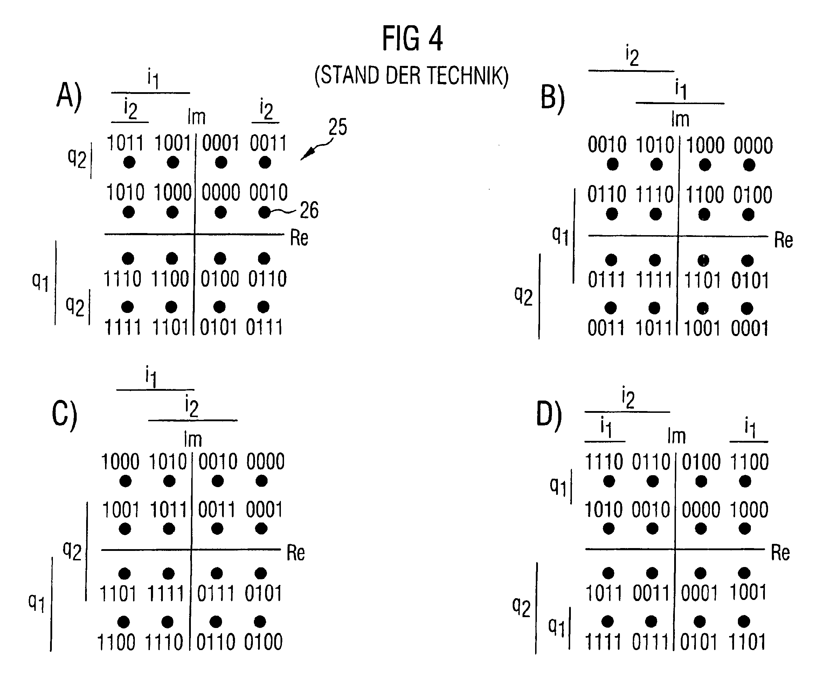

Dies soll nachfolgend näher unter Bezugnahme auf Figur 4A-4D erläutert werden. In Figur 4A ist die Signalkonstellation bzw. der QAM-Symbolraum für eine 16-QAM-Modulation dargestellt. Dabei werden jeweils Bits $i_1$ und $i_2$ sowie $q_1$ und $q_2$ auf ein entsprechendes QAM-Symbol 26 des zweidimensionalen QAM-Symbolraums 25 in der Reihenfolge $i_1 q_1 i_2 q_2$ abgebildet. Die für jedes Bit $i_1$, $i_2$, $q_1$, $q_2$ möglichen Spalten bzw. Zeilen von QAM-Symbolen 26 in dem zweidimensionalen QAM-Symbolraum 25 sind jeweils mit Hilfe entsprechender Striche markiert. So kann beispielsweise das Bit $i_1$ = "1" nur auf QAM-Symbole der ersten zwei Spalten des QAM-Symbolraums abgebildet werden. Aufgrund des "Gray-Mapping" ist die Zuverlässigkeit des höherwertigen Bits $i_1$ größer als die Zuverlässigkeit des niederwertigeren Bits $i_2$. Darüber hinaus schwankt die Bitzuverlässigkeit des Bits $i_2$ abhängig von dem jeweils übertragenen entsprechenden QAM-Symbol 26 (d.h. abhängig davon, ob das entsprechende QAM-Symbol 26 in der äußeren linken oder äußeren rechten Spalte des QAM-Symbolraums 25 angeordnet ist). Dasselbe gilt für die Bits $q_1$ und $q_2$, da die Abbildung der

Bits $q_1$ und $q_2$ äquivalent zur Abbildung der Bits $i_1$ und $i_2$ (allerdings hierzu orthogonal) erfolgt.

Gemäß dem anhand der Figuren 4A-4D erläuterten herkömmlichen Verfahren wird vorgeschlagen, für Wiederholungsdatenpakete ein "Gray-Mapping" zu verwenden, welches sich von dem "Gray-Mapping" des ursprünglichen Datenpakets unterscheidet. D.h. für ein erstes Wiederholungsdatenpaket kann beispielsweise das in Figur 4B verdeutlichte "Gray-Mapping" verwendet werden, während für ein zweites Wiederholungsdatenpaket ein in Figur 4C gezeigtes "Gray-Mapping" und für ein drittes Wiederholungsdatenpaket ein in Figur 4D gezeigtes "Gray-Mapping" verwendet werden kann. Bei Vergleich der Darstellungen von Figur 4A-4D wird deutlich, dass ein und derselben Bitkombination $i_1$ $q_1$ $i_2$ $q_2$ jeweils unterschiedliche QAM-Symbole 26, d.h. unterschiedliche Punkte in dem zweidimensionalen QAM-Symbolraum 25, zugeordnet sind. Diese dynamische Variation des "Gray-Mapping" kann beispielsweise soweit gehen, dass nach einer bestimmten Anzahl von Wiederholungen jedes Bit $i_1$, $i_2$, $q_1$ und $q_2$ an einer Stelle im QAM-Symbolraum 25 mit sehr guter oder guter bzw. schlechter Zuverlässigkeit übertragen wird, wobei dieses Verfahren für eine unterschiedliche Anzahl von Wiederholungen optimiert werden kann.

Aus Figur 4A-4D ist ersichtlich, dass diese Vorgehensweise relativ aufwendig ist, da für jedes Wiederholungsdatenpaket das "Gray-Mapping" verändert werden muss.

Aus der WO-A-0147124 ist ein Verfahren zur Datenübertragung bekannt, bei dem eine frei wählbare einheitliche Punktierung von einem Kodierer generierter Paritätsbits erfolgt.

Aus der US 6 247 150 B1 ist ein ARQ-Protokoll bekannt, bei dem wiederholte Übertragungen von Informationen in einem Datenblocks mit einer unterschiedlichen Verschachtelung erfolgen.

Der vorliegenden Erfindung liegt daher die Aufgabe zugrunde, ein Verfahren sowie entsprechend ausgestaltete Sender und Empfänger zur Datenübertragung gemäß einem ARQ-Verfahren vorzuschlagen, bei dem das zuvor erläuterte Problem, d.h. die Erzielung einer zuverlässigen Datenübertragung mit einem hohen Datendurchsatz, auf einfache Art und Weise gelöst werden kann.

Diese Aufgabe wird durch die Merkmale der unabhängigen Ansprüche gelöst. Im Rahmen der Erfindung liegen auch ein Sender und ein Empfänger, die zur Durchführung der mit den Verfahrensansprüchen definierten Verfahren eingerichtet sind.

Bei dem erfindungsgemäßen Verfahren zur Datenübertragung gemäß einem ARQ-Verfahren, werden von einem Sender Daten in Form von Datenpaketen an einen Empfänger übertragen, wird von dem Sender nach dem Senden eines Datenpakets bei Vorliegen einer entsprechenden Aufforderung des Empfängers mindestens ein Wiederholungsdatenpaket an den Empfänger übertragen, werden die in dem Datenpaket bzw. dem Wiederholungsdatenpaket zu übertragenden Bits einer Bitratenanpassung durch Punktierung oder Repetierung unterzogen, ehe sie von dem Sender an den

Empfänger übertragen werden, erfolgt die Bitratenanpassung gemäß einem Bitratenanpassungsmuster, werden das Bitratenanpassungsmuster oder Parameter zur Berechnung des Bitratenanpassungsmusters zwischen dem Sender 1) und dem Empfänger signalisiert werden, und wird das Datenpaket gemäß einer Modulationsart, welche keine unterschiedlichen Wertigkeiten der Modulationssymbole aufweist, oder gemäß einer höherwertigen Modulation, insbesondere einer 16-QAM-Modulation oder einer 8-PSK- Modulation, übertragen. Gekennzeichnet ist das erfindungsgemäße Verfahren dadurch, dass nur für den Fall der höherwertigen Modulation eine Zuordnungsvorschrift für die Zuordnung von Bit des Datenpaketes auf Modulationssymbole oder Parameter zur Beschreibung der Zuordnungsvorschrift zwischen dem Sender und dem Empfänger signalisiert werden, wobei hierfür Signalisierungsressourcen verwendet werden, die im Falle der Modulationsart, welche keine unterschiedlichen Wertigkeiten der Modulationssymbole aufweist, zur Signalisierung des Bitratenanpassungsmusters oder von Parametern zur Berechnung des Bitratenanpassungsmusters verwendet werde.

Ein erfindungsgemäßer Sender zur Datenübertragung gemäß einem ARQ-Verfahren, wobei von dem Sender Daten in Form von Datenpaketen an einen Empfänger übertragen werden, ist derart ausgestaltet, dass er nach dem Senden eines Datenpakets bei Vorliegen einer entsprechenden Aufforderung des Empfängers mindestens ein Wiederholungsdatenpaket an den Empfänger überträgt, dass er eine Bitratenanpassungseinrichtung zur Anwendung einer Bitratenanpassung auf die in dem Datenpaket bzw. in dem Wiederholungsdatenpaket zu übertragenden Bits aufweist, wobei der Sender mit der Bitratenanpassungseinrichtung derart ausgestaltet ist, dass zur Bitratenanpassung zu verwendende Bitratenanpassungsmuster oder die zur Berechnung derselben benötigten Parameter zwischen dem Sender und dem Empfänger signalisiert werden, und wobei das Datenpaket gemäß einer Modulationsart, welche keine unterschiedlichen Wertigkeiten der Modulationssymbole aufweist, oder gemäß einer höherwertigen Modulation, insbesondere einer 16-QAM-Modulation oder einer 8-PSK- Modulation, übertragen wird. Kennzeichnend ist der Sender derart ausgestaltet, dass nur für den Fall der höherwertigen Modulation eine Zuordnungsvorschrift für die Zuordnung von Bits des Datenpaketes auf Modulationssymbole oder Parameter zur Beschreibung der Zuordnungsvorschrift zwischen dem Sender und dem Empfänger signalisiert werden, wobei hierfür Signalisierungsressourcen verwendet werden, die im Falle der Modulationsart, welche keine unterschiedlichen Wertigkeiten der Modulationssymbole aufweist, zur Signalisierung des Bitratenanpassungsmusters oder von Parametern zur Berechnung des Bitratenanpassungsmusters verwendet werden.

Ein erfindungsgemäßer Empfänger zum Empfang von in Form von Datenpaketen gemäß einem ARQ-Verfahren von einem Sender übertragenen Daten ist zum Empfang und zur Auswertung von einem gemäß dem Verfahren nach Anspruch 1 von dem Sender übertragenen Datenpaket bzw. Wiederholungsdatenpaket ausgestaltet, um den Informationsgehalt des Datenpakets durch gemeinsame Auswertung der in dem Datenpaket und in dem Wiederholungsdatenpaket empfangenen Bits zu bestimmen, wobei der Empfänger für die empfangsseitige Bitratenanpassung zwischen dem Sender und dem Empfänger signalisierte Bitratenanpassungsmuster oder zur Berechnung derselben benötigte Parameter verwendet, wobei das Datenpaket gemäß einer Modulationsart, welche keine unterschiedlichen Wertigkeiten der Modulationssymbole aufweist, oder gemäß einer höherwertigen Modulation, insbesondere einer 16-QAM-Modulation oder einer 8-PSK- Modulation, übertragen wird. Kennzeichnend ist der Empfänger zur Verarbeitung signalisierter Bits ausgestaltet, wobei nur im Falle der höherwertigen Modulation eine Zuordnungsvorschrift für die Zuordnung von Bit des Datenpaketes auf Modulationssymbole oder Parameter zur Beschreibung der Zuordnungsvorschrift verarbeitet werden, wobei hierfür Signalisierungsressourcen verwendet werden, die im Falle der Modulationsart, welche keine unterschiedlichen Wertigkeiten der Modulationssymbole aufweist, zur Signalisierung des Bitratenanpassungsmusters oder von Parametern zur Berechnung des Bitratenanpassungsmusters verwendet werden.

Die Erfindung basiert somit auch auf dem Gedanken, zur Bitratenanpassung zu verwendende Bitratenanpassungsmuster, insbesondere zur Berechnung dieser Bitratenanpassungsmuster benötigten Parameter, zwischen dem Sender und Empfänger zu signalisieren bzw. zu übertragen, um die übertragenen Informationen empfangsseitig mit guter Qualität wieder zu gewinnen.

Je nach Ausführungsvariante der Erfindung erfolgt die Signalisierung des Bitratenanpassungsmusters bzw. die Übertragung der zur Berechnung dieser Bitratenanpassungsmuster benötigten Parameter dabei von dem Sender an den Empfänger oder von dem Empfänger an den Sender.

Insbesondere kann für diese Signalisierung des Bitratenanpassungsmusters ein Bit vorgesehen sein, das beispielsweise mit dem entsprechenden Datenpaket oder als Teil des entsprechenden Datenpaketes übertragen werden kann; je nachdem, ob dieses Bit mit einer "1" oder einer "0" belegt ist, liegt beispielsweise ein selbstdecodierbares oder ein nicht selbstdecodierbares Datenpaket vor.

Dabei enthalten selbstdekodierbare Datenpakete so viele systematische Bits, dass das Datenpaket empfangsseitig bei Annahme eines optimalen Kanals alleine aufgrund der Bits dieses Datenpaketes decodierbar ist. Insbesondere kann ein selbstdecodierbares Datenpaket alle systematischen Bits enthalten.

Die Erfindung basiert nun auch auf der Erkenntnis, dass für den Fall der Repetierung (Bits des Datenpaketes werden innerhalb des Datenpaketes zumindest teilweise mehrfach übertragen) immer alle systematischen Bits übertragen werden und daher immer ein selbstdecodierbares Datenpaket vorliegt. In diesem Fall ist daher eine Signalisierung, ob ein selbstdecodierbares oder ein nicht selbstdecodierbares Datenpaket vorliegt, überflüssig und die für diesen Zweck vorgesehene Übertragungsressource, wie beispielsweise das obengenannte Bit, kann für andere Zwecke verwendet werden. Insbesondere kann diese Übertragungsressource zur Signalisierung von zur Bitratenanpassung zu verwendende Bitratenanpassungsmuster, insbesondere zur Übertragung-der zur Berechnung dieser Bitratenanpassungsmuster benötigten Parameter, verwendet werden. Dadurch kann es möglich sein, für den Fall der Repetierung mehr verschiedene Ratenanpassungsmuster für selbstdecodierbare Datenpakete zu signalisieren als für den Fall der Punktierung.

Insgesamt wird durch die Erfindung die Datenübertragung gemäß einem ARO-Verfahren flexibler und die zur Verfügung stehenden Übertragungsressourcen besser ausgenützt.

Die vorliegende Erfindung wird nachfolgend näher unter Bezugnahme auf die beigefügte Zeichnung anhand bevorzugter Ausführungsbeispiele einer paketorientierten Datenübertragung in einem Mobilfunksystem erläutert, wobei die vorliegende Erfindung selbstverständlich nicht auf Mobilfunksysteme beschränkt ist, sondern allgemein in jeder Art von Kommmunikationssystemen eingesetzt werden kann, in denen ein ARQ-Verfahren zur Datenübertragung vorgesehen ist.

Figur 1 zeigt eine Darstellung zur Verdeutlichung der Signalverarbeitung gemäß einem paketorientierten ARQ-Verfahren der vorliegenden Erfindung,
Figur 2 zeigt eine Darstellung zur Verdeutlichung der Kommunikation in einem Mobilfunksystem,
Figur 3 zeigt einen Ratenanpassungsalgorithmus, welcher beispielsweise im Rahmen der vorliegenden Erfindung zur Ratenanpassung eingesetzt werden kann,
Figur 4A-4D zeigen Darstellungen zur Verdeutlichung der Abbildung von Bits eines ursprünglich gesendeten Datenpakets bzw. von entsprechenden Wiederholungsdatenpaketen auf QAM-Symbole gemäß dem Stand der Technik.

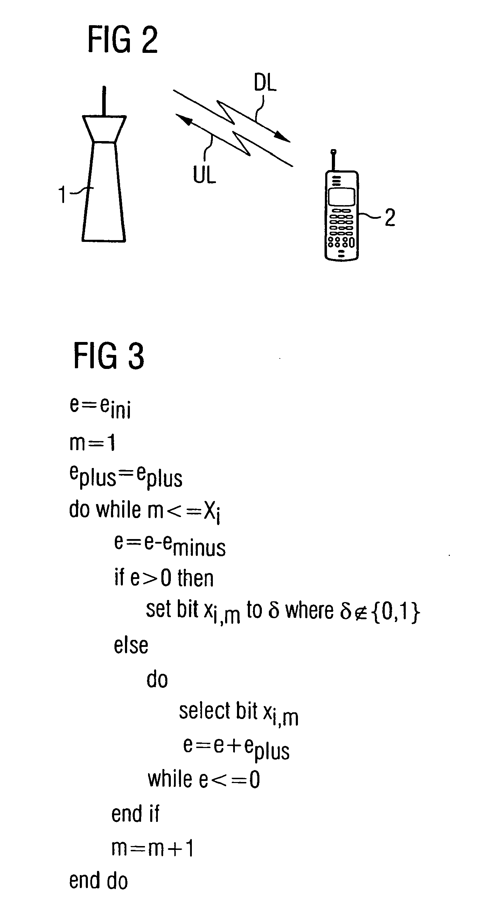

Wie bereits zuvor erläutert worden ist, wird nachfolgend davon ausgegangen, dass mit Hilfe der vorliegenden Erfindung eine paketorientierte Datenübertragung in einem Mobilfunksystem, wie es beispielsweise schematisch in Figur 2 gezeigt ist, realisiert werden soll. Dabei ist in Figur 2 beispielhaft die Kommunikation zwischen einer Basisstation 1 und einer Mobilstation 2 eines Mobilfunksystems, z.B. eines UMTS-Mobilfunksystems, dargestellt. Die Übertragung von Informationen von der Basisstation 1 zu der Mobilstation 2 erfolgt über den sogenannten "Downlink"-Kanal DL, während die Übertragung der Informationen von der Mobilstation 2 zu der Basisstation 1 über den sogenannten "Uplink"-Kanal UL erfolgt.

Die vorliegende Erfindung wird nachfolgend beispielhaft anhand einer paketorientierten Datenübertragung von der Basisstation 1 an die Mobilstation 2, d.h. anhand einer paketorientierten Datenübertragung über den "Downlink"-Kanal erläutert, wobei die vorliegende Erfindung jedoch analog auf eine Datenübertragung über den "Uplink"-Kanal anwendbar ist. Des Weiteren wird die vorliegende Erfindung nachfolgend anhand der in dem jeweiligen Sender durchzuführenden Signalverarbeitungsmaßnahmen erläutert, wobei jedoch zu beachten ist, dass in dem jeweiligen Empfänger zur Auswertung der auf diese Weise senderseitig verarbeiteten Daten eine entsprechende Signalverarbeitung in umgekehrter Reihenfolge erforderlich ist, so dass von der vorliegenden Erfindung nicht nur die Senderseite, sondern auch die Empfängerseite betroffen ist.

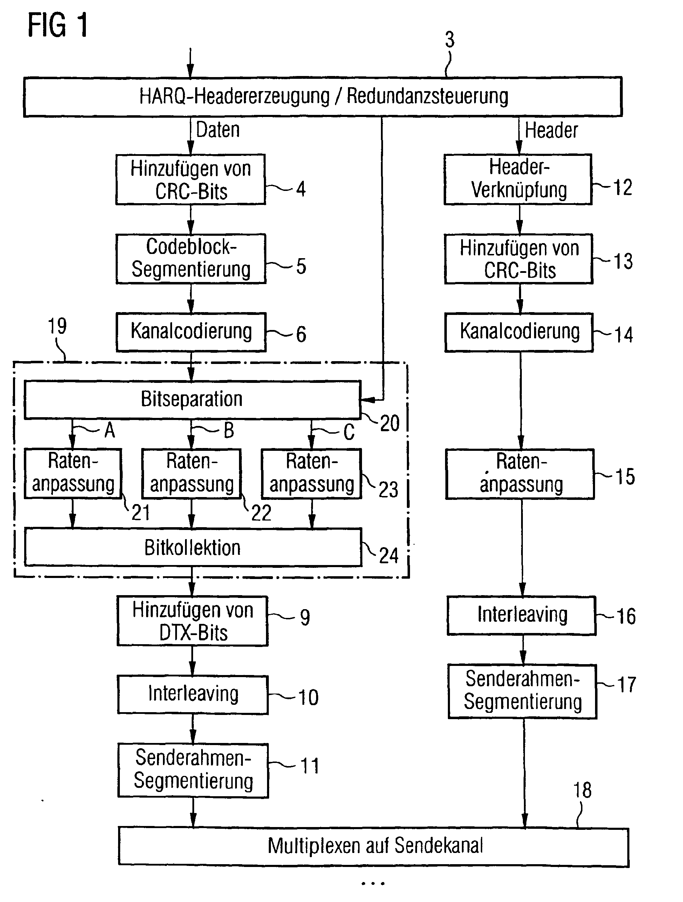

In Figur 1 ist die Signalverarbeitung der in den Datenpaketen zu übertragenden Daten- und Headerinformationen nach einem erfindungsgemäßen Hybrid-ARQ-Verfahren dargestellt.

Auf der Headerseite werden die von einem Funktionsblock 3 erzeugten Headerinformationen einem Funktionsblock 12 zugeführt, welcher dafür sorgt, dass sämtliche Header von allen Datenpaketen, die in ein und demselben Funkpaket gesendet werden sollen, zu einem einzigen Header zusammengefasst werden (sogenannte "Header Concatenation"). Ein Funktionsblock 13 fügt den daraus resultierenden Headerinformationen CRC-Bits zur Headererkennung hinzu. Anschließend wird von einem Funktionsblock 14 eine Kanalcodierung und von einem Funktionsblock 15 eine Ratenanpassung des daraus resultierenden Bitstroms durchgeführt. Ein Interleaver 16 bewirkt, dass die ihm zugeführten Symbole bzw. Bits auf bestimmte Art und Weise umgeordnet und zeitlich gespreizt werden. Die von dem Interleaver 16 ausgegebenen Datenblöcke werden von einem Funktionsblock 17 den einzelnen Sende- bzw. Funkrahmen zugeordnet (sogenannte "Radio Frame Segmentation").

Auf der Datenseite ist ebenso ein Funktionsblock 4 zum Hinzufügen von CRC-Bits vorgesehen. Ein Funktionsblock 5 dient zur Aufspaltung der einem Kanalcodierer 6 zugeführten Daten derart, dass von dem Kanalcodierer 6 stets eine auf eine bestimmte Bitanzahl beschränkte Codierung durchgeführt werden kann.

Durch die von dem Kanalcodierer 6 durchgeführte Kanalcodierung wird den eigentlich zu sendenden Daten redundante Information hinzugefügt. Von dem Kanalcodierer werden systematische Bits und Paritätsbits ausgegeben, wobei ein systematisches Bit jeweils mit einem Informationsbit identisch ist und Paritätsbits Redundanzbits sind, die aus den Informationsbits ermittelt werden. Bei einem ARQ-Verfahren haben enthalten nacheinander gesendete Datenpakete Bits mit gleichem Informationsursprung, d.h. Bits, die jeweils von den gleichen Informationsbits abhängen.

Die von dem Kanalcodierer 6 ausgegebenen Bits werden einem Funktionsblock 19 zugeführt, welcher durch Ausblenden bzw. Weglassen einzelner Bits (sogenannte Punktierung) oder durch Wiederholen einzelner Bits (sogenannte Repetierung) die Bitrate des Bitstroms entsprechend einstellt. Von einem anschließenden Funktionsblock 9 können dem Datenstrom sogenannte DTX-Bits ("Discontinuous Transmission") hinzugefügt werden. Des weiteren sind auch auf der Datenseite Funktionsblöcke 10 und 11 vorgesehen, welche dieselben Funktionen wie die auf der Headerseite vorgesehenen Funktionsblöcke 16 und 17 wahrnehmen.

Abschließend werden die auf der Daten- und Headerseite ausgegebenen Bits von einem Funktionsblock 18 auf den jeweils vorhanden physikalischen Übertragungs- bzw. Sendekanal abgebildet bzw. gemultiplexed (sogenanntes "Multiplexing") und mit Hilfe einer geeigneten Modulation, beispielsweise einer QAM-Modulation, an den Empfänger übertragen.

Bei dem Hybrid-ARQ-Verfahren wird bei einem fehlerhaften Empfang bzw. einer fehlerhaften Decodierung eines Datenpakets durch den Empfänger ein Wiederholungsdatenpaket angefordert.Das Wiederholungspaket ist mit dem zuvor gesendeten und fehlerhaft empfangenen Paket ganz (HARQ type I, Chase Combining) oder partiell identisch. Die letzteren Verfahren werden als partielle inkrementelle Redundanz (incremental redundancy, IR) Verfahren, bzw. als HARQ type III bezeichnet. Als weitere Möglichkeit können die Wiederholungspakete auch rein aus zusätzlicher Redundanzinformation (sog. Paritätbits) bestehen (Full IR bzw. HARQ type II).

Abhängig davon, ob das Wiederholungsdatenpaket weniger oder gleich viele Daten wie das ursprüngliche Datenpaket aufweist, wird von einer vollen oder partiellen Wiederholung gesprochen. Das Datenpaket und das jeweilige Wiederholungsdatenpaket weisen somit zumindest teilweise Bits mit einem gleichen Informa-tionsursprung auf. Der Empfänger kann somit durch gemeinsame Auswertung des ursprünglich gesendeten Datenpakets sowie der angeforderten nachfolgenden Wiederholungsdatenpakete die ursprünglich gesendete Information mit besserer Qualität wiedergewinnen.

Der Funktionsabschnitt 19 umfasst einen Funktionsblock 20, welcher in Abhängigkeit von einer Ansteuerung durch den Funktionsblock 3 die von dem vorgeschalteten Kanalcodierer 6 ausgegebenen codierten Bits auf mindestens zwei parallele Teilbitströme aufteilt, welche jeweils separat, d.h. unabhängig voneinander, einer Ratenanpassung unterzogen werden. In Figur 1 sind diesbezüglich drei Teilbitströme A-C dargestellt, wobei für jeden Teilbitstrom ein Funktionsblock 21-23 zur Durchführung einer entsprechenden Ratenanpassung, d.h. zur Punktierung oder Repetierung einzelner Bits, vorgesehen ist. Auf diese Weise entstehen mehrere unterschiedlich codierte parallele Teilbitströme, welche einem weiteren Funktionsblock 24 zugeführt werden. Dieser weitere Funktionsblock 24 hat die Aufgabe, die einzelnen Bits der parallelen Bitströme in derselben Reihenfolge, welche von dem Funktionsblock 20 für die Bitseparation, d.h. für die Aufteilung auf einzelnen parallelen Teilbitströme, verwendet worden ist, aufzusammeln (Bitkollek-tion). Auf diese Weise wird sichergestellt, dass sich insgesamt die Reihenfolge der nach der Ratenanpassung übriggebliebenen Bits nicht ändert.

Wie bereits zuvor erläutert worden ist, kann die für die einzelnen Teilbitströme A-C vorgesehene Ratenanpassung durch die Funktionsblöcke 21-23 vollkommen unabhängig voneinander erfolgen. Insbesondere können auch die Bits eines oder mehrerer Teilbitströme überhaupt keiner Punktierung oder Repetierung unterzogen werden. Insgesamt ist die Ratenanpassung der einzelnen parallelen Teilbitströme A-C so zu wählen, dass von dem gesamten Funktionsabschnitt 19 auf den von dem Funktionsblock 6 ausgegebenen kanalcodierten Bitstrom pro Datenpaket bzw. Wiederholungsdatenpaket ein gewünschtes Ratenanpassungsmuster angewendet wird. Mit der in Figur 1 gezeigten Realisierung des Funktionsabschnitts 19 mit mehreren parallel durchgeführten Ratenanpassungen kann eine äußerst hohe Flexibilität bei der Codierung erzielt werden.

Der Funktionsabschnitt 19 ist derart ausgestaltet, dass er in Abhängigkeit von der Ansteuerung durch den Funktionsblock 3 auf die Bits eines Wiederholungsdatenpakets ein anderes Ratenanpassungsmuster als auf die Bits des entsprechenden ursprünglich gesendeten Datenpakets anwendet. D.h. dem Funktionsabschnitt 19 wird von dem Funktionsblock 3 mitgeteilt, ob von dem jeweiligen Empfänger ein Wiederholungsdatenpaket angefordert worden ist, wobei der Funktionsabschnitt 19 in diesem Fall die von den einzelnen Funktionsblöcken 21-23 realisierten Ratenanpassungsmuster derart wählt bzw. einstellt, dass insgesamt die Bits des Wiederholungsdatenpakets mit einem anderen Ratenanpassungsmuster als die Bits des zugrundliegenden ursprünglich gesendeten Datenpakets verarbeitet werden.

Die insgesamt von dem Funktionsabschnitt 19 realisierte Ratenanpassung kann beispielsweise gemäß dem in Figur 3 dargestellten Ratenanpassungsalgorithmus, welcher an sich bereits aus dem Stand der Technik bekannt ist, durchgeführt werden.

Der im UMTS Standard enthaltene Rate Matching (Ratenanpassungs) Algorithmus ist in [25.212] beschrieben. Als wesentliche Parameter verwendet er:

- $X_b$ : Anzahl codierter Bits pro Paket im Bitstrom b
- $e_{ini}$: Anfangs-Fehlerwert ($N_{TTI}$ / 3)
- $e_{plus}$: Inkrement des Fehlerwertes bei Punktierung / Repetition
- $e_{minus}$: Dekrement des Fehlerwertes pro Ausgangsbit

Diese Parameter sind im bestehenden Standard z. B. für den Downlink turbocodierter Transportkanäle mit fester Bitposition (Kapitel 4.2.7.2.1 in [25.212]) im Falle von Punktierung wie folgt zu ermitteln:

$$e_{ini} = N_{max} . \qquad\qquad (5.1)$$

Hierbei bezeichnet $N_{max}$ das über alle Transportformate und Transportkanäle ermittelte Maximum der Anzahl Bits pro parity Bitstrom vor dem Rate Matching. Die Inkremente und Dekremente des Fehlerwerts berechnen sich zu:

$$e_{plus} = a \times N_{max} \quad , \quad e_{minus} = a \times \left| \Delta N_i^b \right| , \qquad (5.2)$$

wobei a = 2 für den ersten parity Bitstrom und a = 1 für den zweiten parity Bitstrom gilt. $\left| \Delta N_i^b \right|$ ist die Anzahl der pro Bitstrom b punktierten Bits für den Transportkanal i.

Dabei wird insbesondere ein Ratenanpassungsparameter $e_{ini}$ verwendet, welcher einen für die jeweils durchgeführte Ratenanpassung gültigen Offsetwert hinsichtlich des jeweils angewendeten Ratenanpassungsmusters bezeichnet. Zu Beginn des in Figur 3 dargestellten Ratenanpassungsalgorithmus wird eine Fehlervariable e mit diesem Offsetwert $e_{ini}$ initialisiert, wobei der Fehler e im Falle einer Punktierung beispielsweise das Verhältnis zwischen der augenblicklichen Punktierungsrate und der gewünschten Punktierungsrate bezeichnet.

Anschließend wird der Index m des augenblicklich zu verarbeitenden Bits auf das erste Bit, d.h. auf den Wert 1 gesetzt und ein Hilfsfehlerparameter $e_{plus}$ initialisiert.

Für sämtliche Bits des jeweils zu verarbeitenden Datenpakets Nr. i wird anschließend eine Schleife durchlaufen, wobei die Bitanzahl des jeweiligen Datenpakets mit $X_i$ bezeichnet ist.

Innerhalb dieser Schleife wird zunächst der Fehler e unter Verwendung eines weiteren Hilfsfehlerparameters

$e_{minus}$ erneuert und geprüft, ob der daraus resultierende Fehler e größer als Null ist, um auf diese Weise festzustellen, ob das entsprechende Bit punktiert werden soll oder nicht. Ist die zuvor erwähnte Bedingung erfüllt, wird das entsprechende Bit auf einen Hilfswert δ gesetzt und somit punktiert, d.h. für die nachfolgende Datenübertragung gesperrt.

Ist hingegen die zuvor genannte Bedingung nicht erfüllt, wird das entsprechende Bit für die Datenübertragung ausgewählt und der Fehler e unter Verwendung des erstgenannten Hilfsfehlerparameters $e_{plus}$ neu berechnet.

Zum Abschluss des Ratenanpassungs- bzw. Punktierungsalgorithmus wird der Bitindex m inkrementiert und somit das nächste Bit für die zuvor erläuterte Verarbeitung ausgewählt.

Das auf die Bits eines Datenpakets bzw. Wiederholungsdatenpakets angewendete Ratenanpassungsmuster kann wesentlich durch entsprechende Wahl des Offsetwerts $e_{ini}$ beeinflusst werden. Durch Variation dieses Offsetwerts $e_{ini}$ kann somit auf ein Wiederholungsdatenpaket ein anderes Ratenanpassungsmuster als auf das entsprechende ursprünglich gesendete Datenpaket angewendet werden, wobei die Ratenanpassung insbesondere bezogen auf die Paritätsbits der einzelnen Teilbitströme A-C (vergleiche Figur 1) angewendet werden kann.

Der Offsetwert $e_{ini}$ wird für das ursprünglich gesendete Datenpaket und das Wiederholungsdatenpaket vorteilhafterweise derart gewählt, dass die Verschiebung der daraus resultierenden Ratenanpassungsmuster zueinander maximal, d.h. möglichst groß, ist. Darüber hinaus ist der Offsetwert $e_{ini}$ für das ursprünglich gesendete Datenpaket und das Wiederholungsdatenpaket vorteilhafterweise derart zu wählen, dass möglichst viele der sich einander entsprechenden Bits der beiden Pakete bei der abschließenden Modulation, insbesondere der QAM-Modulation, auf unterschiedliche Punkte, d.h. unterschiedliche QAM-Symbole, des entsprechenden zweidimensionalen QAM-Symbolraums abgebildet werden (vergleiche diesbezüglich beispielsweise die Abbildungen von Figur 4).

Für die Erstübertragung wird in der Regel ein selbstdecodierbares Datenpaket verwendet, d.h. es werden beispielsweise alle systematischen Bits übertragen. Ist abzüglich dieser systematischen Bits nur noch für einen Teil der Paritätbits Platz in der Übertragung, werden die Paritätbits entsprechend punktiert (d. h. nicht übertragen). Ist der vorhandene Platz jedoch größer als alle existierenden Paritätbits, so werden systematische Bits und Paritätbits mit gleicher Rate repetiert (wiederholt). Die Auswahl der punktierten/repetierten Bits erfolgt in UMTS durch einen Algorithmus, der eine möglichst gute Gleichverteilung dieser punktierten/repetierten Bits innerhalb des codierten Datenblocks realisiert.

In einer Wiederholungsübertragung werden basierend auf einer bestimmten Anzahl Signalisierungsbits, das Ratenanpassungsmuster und somit die jeweils zu übertragenden Bits so ausgewählt, dass zum einen verschiedene HARQ-Typen realisiert werden, und zum anderen in jeder Übertragung möglichst andere Bits übertragen werden, um Dekodiergewinn und / oder eine gleichmäßige Verteilung der Gesamtenergie auf alle Bits zu erreichen. Ein bestimmtes Ratenanpassungsmuster oder die Parameter zur Berechung eines bestimmten Ratenanpassungsmusters entsprechen dabei einer bestimmten Redundanzversion.

Eine Variante dieser Erfindung zeigt, wie für eine gegebene Anzahl Bits zur Signalisierung der verschiedenen Redundanzversionen, sowohl für den Fall der Punktierung als auch insbesondere für den Fall der Repetierung die Auswahl der Redundanzversionen optimiert werden kann.

Um dem Empfänger eine korrekte Interpretation des empfangenen Datenpaketes zu ermöglichen, wird zwischen Sender und Empfänger signalisiert, ob es sich bei dem Datenpaket um ein selbstdekodierbares oder ein nicht selbstdekodierbares Datenpaket handelt. Hierfür wird ein Bit Signalisierungsinformation benötigt. Innerhalb eines jeweiligen Typs (selbstdekodierbar oder nicht selbstdecodierbar) können dann weitere Redundanzversionen definiert werden, welche ebenfalls explizit signalisiert werden können. Stehen zur Signalisierung n Bit zur Verfügung, so besteht die gesamte zu signalisierende Information somit aus einem Bit für die Unterscheidung selbstdecodierbar/ nicht selbstdecodierbar und in n-1 Bit für die Beschreibung einer bestimmten Redundanzversion aus einer Vielzahl von Redundanzversionen :

Verwendung der Signalisierungsbits

| Selbstdekodierbarkeit | 1 Bit |
|---|---|
| Redundanzversion | n - 1 Bit |

Die Unterscheidung selbstdekodierbar / nicht selbstdekodierbar macht aber nur im Falle von Punktierung Sinn, bei dem nicht alle kodierten Bits übertragen werden können. Im Falle von Repetierung ist die Selbstdekodierbarkeit a priori gegeben, da ja alle kodierten Bits, manche sogar mehrfach übertragen werden können. In dem Fall der Repetierung ist es daher vorteilhaft, alle n Bits zur Unterscheidung von verschiedenen Redundanzversionen zu verwenden. Insbesondere kann damit im Falle der Repetierung auch für kleine n erheblich besser sichergestellt werden, dass nach Übertragung eines Wiederholungsdatenpaketes und empfangsseitiger Überlagerung des ersten Datenpaketes mit dem Wiederholungsdatenpaket eine möglichst ausgeglichene Energieverteilung auf alle übertragenen Bits erreicht wird. Ein Ausführungsbeispiel der erfindungsgemäßen Verwendung der Signalisierungsbits ist dann in folgender Tabelle gezeigt:

| Verwendung der Signalisierungsbits bei Punktierung und Repetierung | | |
|---|---|---|
| | Punktierung | Repetierung |
| Selbstdekodierbarkeit | 1 Bit | 0 Bit |
| Redundanzversion | n - 1 Bit | n Bit |

Beispielsweise kann hierbei n=3 gewählt werden. Das erlaubt eine vernünftige Anzahl von unterschiedlichen Redundanzversionen und erfordert andererseits keine unnötig hohe Anzahl von Signalisierungs-bits.

Das hier vorgestellte Verfahren optimiert die Signalisierung indem die Bedeutung der Signalisierungsbits davon abhängt, ob in der jeweiligen Übertragung Bits wiederholt oder punktiert werden. Sind insgesamt Ng Signalisierungsworte vorgesehen (das heißt Ng= $2^n$ falls n Bit Signalisierung vorgesehen sind), so werden die Ng Signalisierungsworte wie folgt aufgeteilt:

Bei Punktierung werden die Signalisierungsworte in zwei Teilmengen aufgeteilt, eine für Übertragungen vom selbstdekodierbaren Typus (d. h. systematische Bits sind enthalten), eine zweite für Übertragungen vom nicht selbstdekodierbaren Typus (in der Regel keine systematischen Bits enthalten, insbesondere keine systematischen Bits enthalten). Innerhalb dieser Teilmengen unterscheiden verschiedene Signalisierungsworte dann verschiedene Redundanzversionen.

Es können dabei Ns Redundanzversionen vom selbstdekodierbaren Typus (Partial Incremental Redundancy) ausgewählt werden, welche selbstdekodierbare Redundanzversionen bezeichnen und Ng - Ns Redundanzversionen vom nicht selbstdekodierbaren Typus (Full Incremental Redundancy) bereitgestellt werden. Falls Ns = Ng/2 gilt, lässt sich die bereits vorgestellte Kodierung verwenden. Ein anderer Extremfall ist Ns = 1. In diesem Fall wird nur eine einzige selbstdekodierbare Redundanzversion vorgesehen (die für die erste Übertragung vorgesehen ist) und Ng-1 nicht selbstdekodierbare Redundanzversionen. Diese Wahl wird optimal sein, wenn Ng relativ klein ist (höchstens 8), weil dann trotzdem noch eine relativ hohe Anzahl von Redundanzversionen mit Full IR definiert werden können.

Bei Repetierung werden keine Teilmengen gebildet und alle Signalisierungsworte zur Unterscheidung verschiedener Redundanzversionen verwendet.

Wesentliche Neuerungen dieses Ausführungsbeispiels sind die Unterscheidung der Fälle Repetierung und Punktierung für die Bedeutung der Signalisierungsbits und die Optimierung der Anzahl möglicher HARQ-Typen und verschiedener Redundanzversionen sowohl im Falle von Repetierung als auch für Punktierung bei gegebener Anzahl Signalisierungsbits.

Die Generierung der unterschiedlichen Redundanzversionen kann dabei gemäß einer Parametervariation des Parameters $e_{ini}$ erfolgen, kann aber auch durch ein beliebiges anderes Verfahren generiert werden.

Bislang wurden nur solche Parameter beschrieben, welche die Ratenanpassung oder die Bitauswahl für ein HARQ system beeinflussen, und wie solche Parameter signalisiert werden können. Tatsächlich lassen sich auch durch Variation anderer Parameter Verbesserungen in der Übertragungsrate erzielen. Ein Beispiel für einen derartigen Parameter ist die Variation der Zuordnung von Bits zu 16 QAM Symbolen beim Schritt der Zuweisung von Modulationssymbolen. Das Prinzip dieses Verfahrens ist beispielsweise in den folgenden Standardisierungsdokumenten beschrieben:

R1-01-0237, Panasonic, "Enhanced HARQ Method with Signal Constellation Rearrangement," 3GPP TSG RAN WG1, Las Vegas, USA, February 27th-March 2nd 2001;
R1-01-1059, Panasonic, "Comparison of HARQ Schemes for 16-QAM," 3GPP TSG RAN WG1, Sophia Antipolis, France, November 5th-7th 2001;
R1-01-0151, Panasonic, "16-QAM HARQ Bitmapping Scheme", Espoo, Finland, January, 2002.

Dieses Verfahren erzielt im Wesentlichen dann gute Ergebnisse, wenn die gleiche Redundanzversion wiederholt verwendet wird (Chase combining) oder wenn sich die Redundanzversionen in ihrem Bitinhalt nur wenig unterscheiden. Im Gegensatz dazu erzielt incremental redundancy dann die besten Ergebnisse, wenn sich die einzelnen gesendeten Redundanzversionen stark unterscheiden. Idealer Weise könnte daher die Signalisierung so ausgelegt werden, dass sowohl verschiedene Redundanzversionen als auch verschiedene Zuordnungs-Varianten für das BitMapping (Bit-Zuordnung) auf 16 QAM-Symbole verwendet werden. Wegen einer begrenzten Verfügbarkeit von Signalisierungsbits ist dies aber nicht immer möglich. In diesem Fall muss eine Entscheidung getroffen werden, ob die Signalisierungsbits für die Auswahl von Redundanzversionen oder die Auswahl von Zuordnungs-Varianten verwendet werden. Im folgenden werden Ausgestaltungen für diese Ausführungsvariante erläutert.

In einem ersten diesen Aspekt betreffenden Ausführungsbeispiel werden dann keine Zuordnungs-varianten sondern ausschließlich Redundanzversionen signalisiert, wenn keine 16 QAM oder 8PSK oder höherwertige Modulation verwendet wird, sondern nur BPSK, QPSK oder eine andere Modulationsart welche keine unterschiedlichen Wertigkeiten der Modulationssymbole aufweist.

In einem weiteren Ausführungsbeispiel werden beispielsweise bei der Verwendung einer16QAM- Modulation werden bevorzugt Zuordnungsvarianten ggf. auf Kosten von Redundanzversionen signalisiert, wenn zur Übertragung so viele Bits zur Verfügung stehen, dass alle anstehenden Bits übertragen werden können, mit anderen Worten, wenn keine Punktierung zur Ratenanpassung verwendet werden muss.

In einem weiteren Ausführungsbeispiel werden auch dann bevorzugt Zuordnungsvarianten signalisiert, (ggf. auf Kosten von Redundanzversionen), wenn zur Übertragung zwar weniger Bits zur Verfügung stehen, so dass nicht alle anstehenden Bits übertragen werden können, mit anderen Worten, dass Punktierung zur Ratenanpassung verwendet werden muss, wenn die Punktierungsrate, also der Anteil der zu punktierenden Bits, einen gewissen vorgegebenen Wert nicht überschreitet. Dieser vorgegebene Wert kann im Prinzip beliebig gewählt werden, sinnvoller weise wird er aber kleiner als 50% sein, da bei einer Punktierung von 50% durch Auswahl von zwei komplett orthogonalen also disjunkten Redundanzversionen eine sehr gute Verbesserung durch inkrementelle Redundanz erreicht werden kann. Andererseits erreicht man in diesem Fall keinen zusätzlichen Gewinn durch Zuordnungsvariationen, da die beiden Übertragungen keine gemeinsamen Bits enthalten, bei denen sich ein Gewinn ergeben könnte. Es ist in diesem Fall also nicht unbedingt notwendig, zusätzlich zu Redundanzversionen auch noch Zuordnungsvariationen zu signalisieren.

In einer weiteren Ausführungsvarianten können die oben genannten Ausführungsvarianten dahingehend erweitert werden, dass nicht in Abhängigkeit von den oben beschriebenen Parametern hart zwischen Signalisierungsformtaten hin und hergeschaltet wird, sondern dass je nach Parameter mehr oder weniger Redundanzversionen oder Zuordnungsvarianten signalisiert werden. Es folgt ein Beispiel für den Fall, dass insgesamt vier Alternativen signalisiert werden können:

- Im Bereich von mehr als 50% Punktierung werden alle vier Alternativen für die Signalisierung von Redundanzversionen verwendet werden und keine Zuordnungs-Varianten signalisiert.

- Im Bereich zwischen 50% Punktierung und 33% Punktierung werden 3 Alternativen für die Signalisierung von Redundanzversionen verwendet werden und eine Alternative für eine Zuordnungs-Variante (welche dann nur bei einer speziellen Redundanzversion angewandt werden kann) signalisiert.

- Im Bereich zwischen 33% Punktierung und 20% Punktierung werden zwei Alternativen (also ein Bit) für die Signalisierung von Redundanzversionen verwendet und ebenfalls zwei Alternativen (also ein Bit) für zwei Zuordnungs-Varianten signalisiert. Damit können Redundanzversion und Zuordnungsvariante unabhängig voneinander ausgewählt werden.

- Im Bereich zwischen 20% und 10% Punktierung wird eine Alternative für die Signalisierung einer Redundanzversionen verwendet (welche dann nur bei einer speziellen Zuordnungs-Version angewandt werden kann), und drei Alternativen für Zuordnungs-Varianten.

- Im Bereich von weniger als 10% Punktierung bis weniger als 33% Repetierung werden alle vier Alternativen für die Signalisierung von Zuordnungs-Varianten verwendet und keine Redundanzversionen signalisiert.

- Im Bereich von mehr als 33% Repetierung werden dann wieder je zwei Alternativen (also je ein Bit) für die Signalisierung von Redundanzversionen und Zuordnungs-Varianten signalisiert. Damit können Redundanzversion und Zuordnungsvariante unabhängig voneinander ausgewählt werden.

In den oben angeführten Ausführungsbeispielen wurde als Kriterium das Verhältnis von zur Übertragung zur Verfügung stehenden Bits zu den anstehenden Bits verwendet, und die sich daraus ergebende Punktierungs- bzw. Repetierungsrate. Es soll darauf hingewiesen werden, dass diese Punktierungsrate zwar die Punktierungsrate sein kann, die sich aus dem Verhältnis der Anzahl der Bits nach der Kanalkodierung zur Anzahl der Bits, die übertragen werden, ergibt, dass es aber auch Fälle geben kann, in denen weitere Zwischenschritte durchgeführt werden. Beispielsweise kann zuerst eine Punktierung auf eine Zwischenanzahl von Bits durchgeführt werden, die der Größe eines Empfangsspeichers entspricht, und erst von dieser Anzahl wird eine Punktierung oder Repetierung auf die Anzahl der zu übertragenden Bits durchgeführt. In diesem Fall würde das Kriterium bevorzugt die Punktierungsrate / Repetierungsrate in diesem zweiten Schritt sein, nicht die Gesamtrate.

Für den in Figur 1 gezeigten Funktionsblock 10 wird gemäß einer Ausführungsvariante der Erfindung ein Interleaver verwendet, welcher kein zufälliges Interleaving sondern ein sehr reguläres Interleaving durchführt. So könnte beispielsweise für den Funktionsblock 10 ein Block-Interleaver verwendet werden. Ist der als Funktionsblock 10 verwendete Interleaver ein sehr regulärer Interleaver und ist die Spaltenanzahl, auf welche der Interleaver die ihm zugeführten Bits verteilt, und die Anzahl der unterschiedlich stark gewichteten Punkte in dem zweidimensionalen QAM-Symbolraum bzw. allgemein die Anzahl der unterschiedlich stark gewichteten Modulationspunkte teilerfremd, so ergibt sich eine optimale Zuordnung. Gemäß dem derzeitigen Stand der UMTS-Standardisierung wird als Interleaver ein Blockinterleaver mit zusätzlicher Spaltenvertauschung vorgeschlagen, welcher benachbarte Bits auf Spalten verteilt, die Vielfache von "5" voneinander entfernt sind, und anschließend die Spalten vertauscht. Bei Verwendung von 30 Spalten erfolgt die Spaltenpermutation z.B. gemäß dem folgenden Schema: Spalte Nr. 0, 20, 10, 5, 15, 25, 3, 13, 23, 8... Da der Wert "5" mit der Anzahl der unterschiedlichen Bits beispielsweise bei einer 16-QAM-Modulation (nämlich zwei Bits) und einer 64-QAM-Modulation (nämlich drei Bits) teilerfremd ist, ergibt sich z.B. bei dieser Kombination eine gute Verwürfelung bzw. eine gute Abbildung auf die entsprechenden Modulationspunkte.

Dieses oben beschriebene Vorgehen ist sowohl für Punktierung und Repetierung, sowie für verschiedenste Transportformate möglich. Durch geeignete Wahl der Parameter (z. B. Anzahl der Redundanzversionen, Anzahl der Bitströme) kann es auf verschiedene Modulations- und Codierungsschemata angepasst werden.

## Referenzen

[25.212] "Multiplexing and Channel Coding (FDD) (Release 1999)," Technical Specification 3GPP TS 25.212

## Patentansprüche

1.  Verfahren zur Datenübertragung gemäß einem ARQ-Verfahren,
    bei dem von einem Sender (1) Daten in Form von Datenpaketen an einen Empfänger (2) übertragen werden,
    bei dem von dem Sender (1) nach dem Senden eines Datenpakets bei Vorliegen einer entsprechenden Aufforderung des Empfängers (2) mindestens ein Wiederholungsdatenpaket an den Empfänger (2) übertragen wird,
    bei dem die in dem Datenpaket bzw. dem Wiederholungsdatenpaket-zu übertragenden Bits einer Bitratenanpassung durch Punktierung oder Repetierung unterzogen werden, ehe sie von dem Sender (1) an den Empfänger (2) übertragen werden,
    bei dem die Bitratenanpassung gemäß einem Bitratenanpassungsmuster erfolgt,
    bei dem das Bitratenanpassungsmuster oder Parameter zur Berechnung des Bitratenanpassungsmusters zwischen dem Sender (1) und dem Empfänger (2) signalisiert werden,
    bei dem das Datenpaket gemäß einer Modulationsart, welche keine unterschiedlichen Wertigkeiten der Modulationssymbole aufweist, oder gemäß einer höherwertigen Modulation, insbesondere einer 16-QAM-Modulation oder einer 8-PSK- Modulation, übertragen wird,
    **dadurch gekennzeichnet,**
    **dass** nur für den Fall der höherwertigen Modulation eine Zuordnungsvorschrift für die Zuordnung von Bits des Datenpaketes auf Modulationssymbole oder Parameter zur Beschreibung der Zuordnungsvorschrift zwischen dem Sender (1) und dem Empfänger (2) signalisiert werden, wobei hierfür Signalisierungsressourcen verwendet werden, die im Falle der Modulationsart, welche keine unterschiedlichen Wertigkeiten der Modulationssymbole aufweist, zur Signalisierung des Bitratenanpassungsmusters oder von Parametern zur Berechnung des Bitratenanpassungsmusters verwendet werden.

2.  Sender zur Datenübertragung gemäß einem ARQ-Verfahren,
    wobei von dem Sender (1) Daten in Form von Datenpaketen an einen Empfänger (2) übertragen werden,
    wobei der Sender (1) derart ausgestaltet ist, dass er nach dem Senden eines Datenpakets bei Vorliegen einer entsprechenden Aufforderung des Empfängers (2) mindestens ein Wiederholungsdatenpaket an den Empfänger (2) überträgt, und
    wobei der Sender (1) eine Bitratenanpassungseinrichtung (19) zur Anwendung einer Bitratenanpassung auf die in dem Datenpaket bzw. in dem Wiederholungsdatenpaket zu übertragenden Bits aufweist,
    wobei der Sender (1) mit der Bitratenanpassungseinrichtung (19) derart ausgestaltet ist, dass
    zur Bitratenanpassung zu verwendende Bitratenanpassungsmuster oder die zur Berechnung derselben benötigten Parameter zwischen dem Sender (1) und dem Empfänger (2) signalisiert werden,
    wobei das Datenpaket gemäß einer Modulationsart, welche keine unterschiedlichen Wertigkeiten der Modulationssymbole aufweist, oder gemäß einer höherwertigen Modulation, insbesondere einer 16-QAM-Modulation oder einer 8-PSK- Modulation, übertragen wird,
    **dadurch gekennzeichnet,**
    **dass** der Sender (1) derart ausgestaltet ist, dass nur für den Fall der höherwertigen Modulation eine Zuordnungsvorschrift für die Zuordnung von Bits des Datenpaketes auf Modulationssymbole oder Parameter zur Beschreibung der Zuordnungsvorschrift zwischen dem Sender (1) und dem Empfänger (2) signalisiert werden, wobei hierfür Signalisierungsressourcen verwendet werden, die im Falle der Modulationsart, welche keine unterschiedlichen Wertigkeiten der Modulationssymbole aufweist, zur Signalisierung des Bitratenanpassungsmusters oder von Parametern zur Berechnung des Bitratenanpassungsmusters verwendet werden.

3. Empfänger (2) zum Empfang von in Form von Datenpaketen gemäß einem ARO-Verfahren von einem Sender (1) übertragenen Daten,
wobei der Empfänger (2) zum Empfang und zur Auswertung von einem gemäß dem Verfahren nach Anspruch 1 von dem Sender (1) übertragenen Datenpaket bzw. Wiederholungsdatenpaket ausgestaltet ist, um den Informationsgehalt des Datenpakets durch gemeinsame Auswertung der in dem Datenpaket und in dem Wiederholungsdatenpaket empfangenen Bits zu bestimmen,
wobei der Empfänger für die empfangsseitige Bitratenanpassung zwischen dem Sender (1) und dem Empfänger (2) signalisierte Bitratenanpassungsmuster oder zur Berechnung derselben benötigte Parameter verwendet,
wobei das Datenpaket gemäß einer Modulationsart, welche keine unterschiedlichen Wertigkeiten der Modulationssymbole aufweist, oder gemäß einer höherwertigen Modulation, insbesondere einer 16-QAM-Modulation oder einer 8-PSK- Modulation, übertragen wird,
**dadurch gekennzeichnet,**
**dass** der Empfänger (2) zur Verarbeitung signalisierter Bits ausgestaltet ist, wobei nur im Falle der höherwertigen Modulation eine Zuordnungsvorschrift für die Zuordnung von Bits des Datenpaketes auf Modulationssymbole oder Parameter zur Beschreibung der Zuordnungsvorschrift verarbeitet werden, wobei hierfür Signalisierungsressourcen verwendet werden, die im Falle der Modulationsart, welche keine unterschiedlichen Wertigkeiten der Modulationssymbole aufweist, zur Signalisierung des Bitratenanpassungsmusters oder von Parametern zur Berechnung des Bitratenanpassungsmusters verwendet werden.

## Claims

1. Method for transferring data according to an ARQ methodology,
wherein data is transferred from a transmitter (1) to a receiver (2) in the form of data packets,
wherein at least one repeat data packet is transferred from the transmitter (1) to the receiver (2) after transmission of a data packet when a corresponding request is issued by the receiver (2),
wherein the bits to be transferred in the data packet or in the repeat data packet are subjected to bit rate adaptation by puncturing or repeating before they are transferred from the transmitter (1) to the receiver (2);
wherein the bit rate adaptation takes place according to a bit rate adaptation model,
wherein the bit rate adaptation model or parameters for calculating the bit rate adaptation model are signalled between the transmitter (1) and the receiver (2),
wherein the data packet is transmitted according to a modulation type which does not have different values for modulation symbols, or according to a higher-value modulation, in particular a 16-QAM modulation or an 8-PSK modulation, **characterised in that** a mapping rule for the mapping of bits in the data packet to modulation symbols or parameters for describing the mapping rule are signalled between the transmitter (1) and the receiver (2) only in the case of a higher-value modulation, wherein signalling resources are used for this purpose, which are used in the case of the modulation type which does not have different values for the modulation symbols, for signalling the bit rate adaptation model or parameters for calculating the bit rate adaptation model.

2. Transmitter for data transmission according to an ARQ methodology,
wherein data is transferred from the transmitter (1) to a receiver (2) in the form of data packets,
wherein the transmitter (1) is configured in such a way that it transfers at least one repeat data packet to the receiver (2) after transmission of a data packet when a corresponding request is issued by the receiver (2), and
wherein the transmitter (1) has a bit rate adaptation device (19) for applying bit rate adaptation to the bits to be transferred in the data packet or in the repeat data packet, wherein the transmitter (1) comprising the bit rate adaptation device (19) is configured in such a way that
bit rate adaptation models to be used for the bit rate adaptation or parameters for calculating said bit rate adaptation models are signalled between the transmitter (1) and the receiver (2),
wherein the data packet is transmitted according to a modulation type which does not have different values for modulation symbols, or according to a higher-value modulation, in particular a 16-QAM modulation or an 8-PSK modulation, **characterised in that**
the transmitter (1) is configured in such a way that a mapping rule for the mapping of bits in the data packet to modulation symbols or parameters for describing the mapping rule are signalled between the transmitter (1) and the receiver (2) only in the case of a higher-value modulation, wherein signalling resources are used for this purpose, which are used in the case of the modulation type which does not have different values for the modulation symbols, for signalling the bit rate adaptation model or parameters for calculating the bit rate adaptation model.

3. Receiver (2) for receiving data transmitted from a transmitter (1) in the form of data packets according to an ARQ methodology,
wherein the receiver (2) is configured to receive and evaluate a data packet or repeat data packet transmitted by the transmitter (1) according to the method as claimed in claim 1 in order to determine the information content of the data packet by joint evaluation of the bits received in the data packet and in the repeat data packet,
wherein the receiver uses for the receiver-side bit rate adaptation bit rate adaptation models or parameters required for the calculation of said bit rate adaptation models that have been signalled between the transmitter (1) and the receiver (2),
wherein the data packet is transmitted according to a modulation type which does not have different values for modulation symbols, or according to a higher-value modulation, in particular a 16-QAM modulation or an 8-PSK modulation, **characterised in that**
the receiver (2) is configured to process signalled bits, wherein a mapping rule for the mapping of bits in the data packet to modulation symbols or parameters for describing the mapping rule are processed only in the case of a higher-value modulation, wherein signalling resources are used for this purpose, which are used in the case of the modulation type which does not have different values for the modulation symbols, for signalling the bit rate adaptation model or parameters for calculating the bit rate adaptation model.

**Revendications**

1. Procédé de transmission de données selon un procédé de demande de répétition automatique (ARQ),
dans lequel des données sous la forme de paquets de données sont transmises par un émetteur (1) à un récepteur (2) ;
dans lequel au moins un paquet de données de répétition est transmis par l'émetteur (1) au récepteur (2) après l'envoi d'un paquet de données en présence d'une demande correspondante du récepteur (2) ;
dans lequel les bits à transmettre dans le paquet de données ou dans le paquet de données de répétition sont soumis à une adaptation de débit binaire par ponctuation ou répétition avant qu'ils ne soient transmis par l'émetteur (1) au récepteur (2) ;
dans lequel l'adaptation de débit binaire a lieu selon un modèle d'adaptation de débit binaire ;
dans lequel le modèle d'adaptation de débit binaire ou les paramètres de calcul du modèle d'adaptation de débit binaire sont signalés entre l'émetteur (1) et le récepteur (2) ;
dans lequel le paquet de données est transmis conformément à un type de modulation qui ne comporte pas de poids différents des symboles de modulation, ou conformément à une modulation de poids fort, en particulier une modulation d'amplitude en quadrature à 16 états (16-QAM) ou une modulation par déplacement de phase à 8 états (8-PSK),
**caractérisé**
**en ce qu'**un algorithme d'attribution pour l'attribution de bits du paquet de données à des symboles de modulation ou des paramètres de description de l'algorithme d'attribution sont signalés entre l'émetteur (1) et le récepteur (2) uniquement pour le cas de la modulation de poids fort, des ressources de signalisation étant employées pour cela qui, dans le cas du type de modulation qui ne comporte pas de poids différents des symboles de modulation, sont employées pour la signalisation du modèle d'adaptation de débit binaire ou de paramètres de calcul du modèle d'adaptation de débit binaire.

2. Emetteur pour transmettre des données selon un procédé ARQ, étant entendu que des données sous la forme de paquets de données sont transmises par l'émetteur (1) à un récepteur (2) ;
étant entendu que l'émetteur (1) est configuré de telle sorte qu'il transmet au moins un paquet de données de répétition au récepteur (2) après l'envoi d'un paquet de données en présence d'une demande correspondante du récepteur (2), et
étant entendu que l'émetteur (1) comporte un dispositif d'adaptation de débit binaire (19) pour appliquer une adaptation de débit binaire aux bits à transmettre dans le paquet de données ou dans le paquet de données de répétition ;
étant entendu que l'émetteur (1) comportant le dispositif d'adaptation de débit binaire est configuré de telle sorte que les modèles d'adaptation de débit binaire à employer pour l'adaptation de débit binaire ou les paramètres nécessaires pour calculer ceux-ci sont signalés entre l'émetteur (1) et le récepteur (2) ;
étant entendu que le paquet de données est transmis conformément à un type de modulation qui ne comporte pas de poids différents des symboles de modulation, ou conformément à une modulation de poids fort, en particulier une modulation 16-QAM ou une modulation 8-PSK,

**caractérisé**

**en ce que** l'émetteur (1) est configuré de telle sorte qu'un algorithme d'attribution pour l'attribution de bits du paquet de données à des symboles de modulation ou des paramètres de description de l'algorithme d'attribution sont signalés entre l'émetteur (1) et le récepteur (2) uniquement pour le cas de la modulation de poids fort, des ressources de signalisation étant employées pour cela qui, dans le cas du type de modulation qui ne comporte pas de poids différents des symboles de modulation, sont employées pour la signalisation du modèle d'adaptation de débit binaire ou de paramètres de calcul du modèle d'adaptation de débit binaire.

3. Récepteur (2) pour recevoir des données transmises par un émetteur (1) selon un procédé ARQ sous la forme de paquets de données,

étant entendu que le récepteur (2) est configuré pour recevoir et pour analyser un paquet de données ou un paquet de données de répétition transmis par l'émetteur (1) conformément au procédé selon la revendication 1 pour déterminer le contenu informatif du paquet de données par analyse commune des bits reçus dans le paquet de données et dans le paquet de données de répétition ;

étant entendu que le récepteur utilise pour l'adaptation de débit binaire côté réception des modèles d'adaptation de débit binaire ou des paramètres nécessaires pour calculer ceux-ci qui ont été signalés entre l'émetteur (1) et le récepteur (2) ;

étant entendu que le paquet de données est transmis conformément à un type de modulation qui ne comporte pas de poids différents des symboles de modulation, ou conformément à une modulation de poids fort, en particulier une modulation 16-QAM ou une modulation 8-PSK,

**caractérisé**

**en ce que** le récepteur (2) est configuré pour traiter les bits signalés, étant entendu qu'un algorithme d'attribution pour l'attribution de bits du paquet de données à des symboles de modulation ou des paramètres de description de l'algorithme d'attribution sont traités uniquement dans le cas de la modulation de poids fort, des ressources de signalisation étant employées pour cela qui, dans le cas du type de modulation qui ne comporte pas de poids différents des symboles de modulation, sont employées pour la signalisation du modèle d'adaptation de débit binaire ou de paramètres de calcul du modèle d'adaptation de débit binaire.

# FIG 1

# FIG 2

DL

UL

1

2

# FIG 3

$e = e_{ini}$

$m = 1$

$e_{plus} = e_{plus}$

do while $m <= X_i$

    $e = e - e_{minus}$

    if $e > 0$ then

        set bit $x_{i,m}$ to $\delta$ where $\delta \notin \{0,1\}$

    else

        do

            select bit $x_{i,m}$

            $e = e + e_{plus}$

        while $e <= 0$

    end if

    $m = m + 1$

end do

FIG 4
(STAND DER TECHNIK)

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 0147124 A
- US 6247150 B1